# EUROPÄISCHE PATENTSCHRIFT

(11) **EP 1 310 928 B1**
(45) Veröffentlichungstag und Bekanntmachung des Hinweises auf die Patenterteilung: **26.10.2005**
(21) Anmeldenummer: 01250394.2
(22) Anmeldetag: 08.11.2001
(51) Int. Cl.: G07F 19/00

(54) **Verfahren zum Ermöglichen und Durchführen einer Geldzahlung unter Nutzung eines Kommunikationsnetzes**
Method for enabling and conducting a payment transaction using a communication network
Méthode pour effectuer une transaction monétaire utilisant un réseau de communication

(43) Veröffentlichungstag der Anmeldung: 14.05.2003
(73) Patentinhaber: SIEMENS AKTIENGESELLSCHAFT, 80333 München (DE)
(72) Erfinder: Klatt, Uwe, 13507 Berlin (DE); Ryll, Thomas, 10823 Berlin (DE)

(56) Entgegenhaltungen:
- EP-A- 0 855 687
- EP-A- 1 103 934
- EP-A- 1 120 979
- WO-A-99/24921
- BRENNAN R ET AL: "EVOLUTIONARY TRENDS IN INTELLIGENT NETWORKS" IEEE COMMUNICATIONS MAGAZINE, IEEE SERVICE CENTER. PISCATAWAY, N.J, US, Bd. 38, Nr. 6, Juni 2000 (2000-06), Seiten 86-93, XP000932650 ISSN: 0163-6804

## Beschreibung

Die Erfindung betrifft ein Verfahren zum Ermöglichen einer Geldzahlung unter Nutzung eines Kommunikationsnetzes.

Es besteht zum Beispiel beim sogenannten "Elektronischen Handel" (E-Commerce) die Notwendigkeit, Zahlungsvorgänge unter Nutzung von Kommunikationsnetzen durchzuführen. Solche Zahlungsvorgänge können z.B. bei der Erbringung von kostenpflichtigen Diensten oder Leistungen (z.B. Lieferung von Informationen, Daten oder Waren) über die Kommunikationsnetze auftreten. Als derartige Kommunikationsnetze werden beispielsweise das Internet oder Telekommunikationsnetze (Mobilfunknetze, Festnetze) genutzt. Zur Bezahlung der Dienste oder Leistungen werden Verfahren beispielsweise für das bargeldlose Bezahlen unter Nutzung eines mobilen Endgerätes (z. B. eines Mobiltelefons, eines Laptops, Persönlichen Digitalen Assistenten PDA oder Palmtops) und/oder eines Internet-Endgerätes (z.B. Internet-Rechner) benötigt. Es werden jedoch auch außerhalb des "Elektronischen Handels" und unabhängig von der Erbringung von Diensten Verfahren zum Bezahlen über Kommunikationsnetze benötigt, z.B. bei Spenden.

Oftmals führen Zahlungsempfänger die relativ aufwendigen Zahlungsvorgänge nicht selbst aus, sondern bedienen sich der Hilfe von Zahlungsdienstleistern, sog. "Payment Service Providern", welche Zahlungssysteme zum Abwickeln von Zahlungsvorgängen betreiben. An derartigen Zahlungsvorgängen sind also oftmals ein Zahlungssender (z.B. ein Kunde, Consumer), ein Zahlungsempfänger (z.B. ein Händler, Service Provider, Merchant) und ein Zahlungssystem eines Zahlungsdienstleisters beteiligt, wobei sowohl der Zahlungssender als auch der Zahlungsempfänger die Dienste des Zahlungsdienstleisters in Anspruch nehmen.

Aus der internationalen Patentanmeldung WO 99/24921 ist ein Verfahren bekannt, bei dem einem virtuellen Händler ein Payment-Server und einem Kunden ein weiterer Payment-Server zugeordnet ist. Um Zahlungsvorgänge z.B. zwischen verschiedenen Ländern unter Nutzung verschiedener Währungen durchführen zu können, werden Zahlungsanforderungen von dem einen Payment-Server an den weiteren Payment-Server weitergeleitet.

Aus dem Artikel "Evolutionary Trends in Intelligent Networks" von R. Brennan et al., IEEE Communications Magazine, Juni 2000, Seite 86 ff. ist bekannt, dass mittels eines Parlay APIs kunden- oder "Third-party"-gesteuerte Dienste die Möglichkeiten eines Intelligenten Netzes eines Telekommunikationsnetzbetreibers nutzen können. Es kann beispielsweise ein Informationssystem eines Unternehmens über einen Parlay-Server mit dem Netz des Betreibers verbunden werden.

Es ist Aufgabe der vorliegenden Erfindung, ein Verfahren anzugeben, mit dem auf einfache und zuverlässige Art und Weise Zahlungen zwischen einem Zahlungssender und einem Zahlungsempfänger auch dann ermöglicht werden können, wenn der vom Zahlungssender genutzte Zahlungsdienstleister dem Zahlungsempfänger unbekannt ist oder umgekehrt.

Diese Aufgabe wird erfindungsgemäß gelöst durch ein Verfahren zum Ermöglichen einer Geldzahlung unter Nutzung eines ersten Kommunikationsnetzes, wobei ein Zahlungssender über ein Kommunikationsendgerät verfügt, welches einem ersten Zahlungssystem des ersten Kommunikationsnetzes zugeordnet ist, und sich das erste Zahlungssystem bei einem mit dem ersten Zahlungssystem verbundenen Vermittlungsknoten registriert, und wobei einem Zahlungsempfänger ein zweites Zahlungssystem zugeordnet ist, bei dem
- von dem Zahlungsempfänger eine den Zahlungssender betreffende Zahlungsnachricht zu dem zweiten Zahlungssystem übertragen wird,
- von dem zweiten Zahlungssystem anhand von in der Zahlungsnachricht übersandten Informationen über den Zahlungssender erkannt wird, dass der Zahlungssender dem zweiten Zahlungssystem nicht zugeordnet ist,
- von dem zweiten Zahlungssystem eine das erste Zahlungssystem betreffende Anfrage anhand von in der Zahlungsnachricht übersandten Informationen über den Zahlungssender an den Vermittlungsknoten gesendet wird,
- von dem Vermittlungsknoten auf dem ersten Zahlungssystem ein Verbindungsobjekt angelegt wird und ein Kennzeichen, welches ein Kennzeichen für eine aufzubauende Kommunikationsverbindung zwischen dem ersten Zahlungssystem und dem zweiten Zahlungssystem darstellt, vom ersten Zahlungssystem zu dem Vermittlungsknoten übertragen wird,
- von dem Vermittlungsknoten dieses Kennzeichen an das zweite Zahlungssystem gesendet wird, um diesem den Aufbau der Kommunikationsverbindung und eine nachfolgende Geldzahlung mittels der Kommunikationsverbindung zu ermöglichen.

Hierbei ist es besonders vorteilhaft, dass das Kennzeichen der Kommunikationsverbindung zwischen dem ersten und dem zweiten Zahlungssystem von dem Vermittlungsknoten gesendet wird. Daher braucht das zweite Zahlungssystem nicht von vornherein Zugriffsmöglichkeiten auf das erste Zahlungssystem zu besitzen; dadurch wird für das erste Zahlungssystem die Si-cherheit vor unerwünschten Zugriffen erhöht. Außerdem wird für das zweite Zahlungssystem der Verwaltungsaufwand verringert, da dieses keine Kennzeichen für Zahlungssysteme vorhalten muß. Weiterhin ist besonders vorteilhaft, dass bei dem Verfahren an sich bereits aus OSA/Parlay-Spezifikationen bekannte Abläufe verwendet werden können, wodurch das erfindungsgemäße Verfahren mit geringem Aufwand und sehr kostengünstig realisiert werden kann.

Das erfindungsgemäße Verfahren kann so gestaltet sein, dass das erste Zahlungssystem an das erste Kommunikationsnetz und das zweite Zahlungssystem an ein zweites Kommunikationsnetz angeschlossen ist, und dass durch die Kommunikationsverbindung das erste Kommunikationsnetz und das zweite Kommunikationsnetz verbindbar sind. Dabei ist von besonderem Vorteil, dass das erfindungsgemäße Verfahren auch dann angewendet werden kann, wenn sich die beteiligten Zahlungssysteme in verschiedenen Kommunikationsnetzen befinden.

Bei dem erfindungsgemäßen Verfahren kann als Vermittlungsknoten ein nach "Open Service Access/Parlay"-Vorgaben arbeitender Vermittlungsknoten (OSA/Parlay-Gateway) verwendet werden. Dies hat insbesondere den Vorteil, dass von einem derart ausgestalteten Vermittlungsknoten bei der OSA/Parlay-Technologie verfügbare Sicherheitsmechanismen für den Aufbau der Kommunikationsverbindung und die Datenübertragung genutzt werden können.

Das erfindungsgemäße Verfahren kann so durchgeführt werden, dass das erste Zahlungssystem bei dem Vermittlungsknoten als ein Bezahldienste anbietendes System registriert wird, von dem zweiten Zahlungssystem beim Stellen der Anfrage ein Bezahldienst angefordert wird, daraufhin das Kennzeichen der Kommunikationsverbindung erstellt und an das zweite Zahlungssystem gesendet wird, und von dem zweiten Zahlungssystem die Kommunikationsverbindung aufgebaut wird. Hierbei ist besonders vorteilhaft, dass das zweite Zahlungssystem beim Stellen der Anfrage keine detaillierten Informationen über das erste Zahlungssystem zu besitzen braucht, da die notwendigen Informationen über das erste Zahlungssystem durch die Registrierung desselben bei dem Vermittlungsknoten bekannt sind.

Zur weiteren Erläuterung der Erfindung ist in der
Figur 1 schematisch ein Ausführungsbeispiel von Abläufen der erfindungsgemäßen Verfahren und in der
Figur 2 ein weiteres Ausführungsbeispiel von Abläufen der erfindungsgemäßen Verfahren dargestellt.

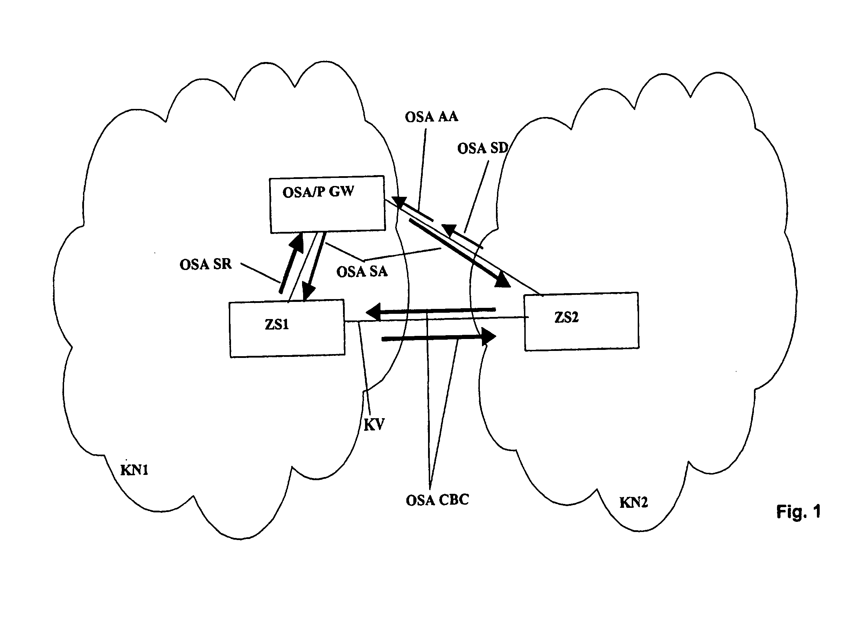

In der Figur 1 sind wesentliche Schritte der erfindungsgemäßen Verfahren dargestellt, die unter Nutzung der sogenannten "OSA/Parlay"-Technologie durchgeführt werden. Die OSA/Parlay-Technologie an sich ist bekannt und beispielsweise in den Druckschriften "3GPP TS 29.198-3 V4.2.0(2001-09), Technical Specification "3^{rd} Generation Partnership Project; Technical Specification Group Core Network; Open Service Access (OSA); Application Programming Interface (API); Part 3: Framework (Release 4)"; "3GPP TS 29.198-12 V4.1.0 (2001-09) Technical Specification, 3^{rd} Generation Partnership Project; Technical Specification Group Core Network; Open Service Access (OSA); Application Programming Interface (API); Part 12: Charging; (Release 4)" und in der Druckschrift "3GPP TS 22.127 (V5.1.1 (2001-10); 3^{rd} Generation Partnership Project; Technical Specification Group Services and System Aspects; Service aspects; Stage 1 Service Requirement for the Open Service Access (OSA) (Release 5)" beschrieben. Informationen zu der Organisation "3GPP" sind im Internet unter der Internetadresse http://www.3gpp.org abrufbar.

Auf der linken Seite der Figur 1 ist ein erstes Kommunikationsnetz KN1 dargestellt, bei dem es sich beispielsweise um ein Telekommunikationsnetz oder auch um einen Teil des Internets handeln kann. In dem ersten Kommunikationsnetz KN1 befindet sich ein erstes Zahlungssystem ZS1 und ein mit diesem ersten Zahlungssystem ZS1 verbundener Vermittlungsknoten OSA/P GW (OSA/P GW = Open Service Access / Parlay Gateway). Bei einem solchen Vermittlungsknoten kann es sich um einen Vermittlungsknoten mit OSA/Parlay-Funktion (auch als OSA/Parlay-Framework-Funktion bezeichnet) handeln, ein Beispiel für einen derartigen Vermittlungsknoten ist ein sog. OSA/Parlay-Gateway". Der Vermittlungsknoten dient der Vorbereitung und dem Aufbau einer Kommunikationsverbindung zwischen dem ersten Zahlungssystem ZS1 und einem zweiten Zahlungssystem ZS2, welches einem zweiten Kommunikationsnetz KN2 (Auf der rechten Seite der Figur 1 dargestellt) zugeordnet ist. Die spätere Kommunikation selbst erfolgt jedoch nicht über den Vermittlungsknoten, sondern über die Kommunikationsverbindung direkt zwischen den Zahlungssystemen. Der Vermittlungsknoten hat auf diese Kommunikation keinen direkten Einfluss mehr.

Die Zahlungssysteme können sich - wie in der Figur 1 dargestellt - in den jeweiligen Kommunikationsnetzen befinden, sie können z.B. einen Netzknoten der Kommunikationsnetze bilden. Die Zahlungssysteme können allerdings auch unabhängig von den Kommunikationsnetzen bestehen und an diese lediglich angeschlossen sein. Zwischen dem ersten Zahlungssystem ZS1, dem zweiten Zahlungssystem ZS2 und dem Vermittlungsknoten OSA/P GW können im Laufe des erfindungsgemäßen Verfahrens die im Folgenden beschriebenen Verfahrensschritte durchgeführt werden.

Das Zahlungssystem ZS1 kann sich bei dem Vermittlungsknoten OSA/P GW registrieren lassen, indem es eine sog. OSA Service Registration (OSA SR) ausführt. Mit dieser Registrierung OSA SR meldet sich das erste Zahlungssystem auf dem OSA-Gateway OSA/P GW als ein sog. "Payment Capability Server"(also als ein Rechner, der Zahlungsdienste ausführen kann) an und bietet damit diese Zahlungsdienste (Paymentdienste) für an Dienstnutzung interessierte Stellen an.

Eine derartige an einer Dienstnutzung interessierte Stelle ist das zweite Zahlungssystem ZS2 im zweiten Kommunikationsnetz KN2. Dieses zweite Zahlungssystem agiert als ein sog. OSA-Kunde (OSA Client) und nimmt als ein solcher Kontakt zu dem Vermittlungsknoten OSA/P GW auf. Dabei meldet sich das zweite Zahlungssystem bei dem Vermittlungsknoten OSA/P GW als "OSA-Client" und es wird eine Authentifizierung und Autorisation durchgeführt. Dies kann beispielsweise geschehen, indem das zweite Zahlungssystem eine bereits im Vorfeld mit dem Vermittlungsknoten ausgehandelte Zahlungssystemkennung und ein zugehöriges Passwort an den Vermittlungsknoten OSA/P GW überträgt. Ebenso können dafür digitale Signaturen verwendet werden, beispielsweise unter Nutzung eines unter der Bezeichnung "RSA" bekannten Verfahrens von Rivest, Shamir und Adleman. Dieser Vorgang wird in der Figur 1 durch den Pfeil OSA AA (OSA AA = OSA Authentication and Authorisation) dargestellt.

Nach erfolgreicher Authentifizierung und Autorisation sendet das zweite Zahlungssystem ZS2 eine Nachricht an den Vermittlungsknoten OSA/P GW, mit der es den Vermittlungsknoten zur Angabe eines bestimmten Dienstes, hier des Dienstes des ersten Zahlungssystems ZS1 auffordert. Das zweite Zahlungssystem ZS2 nimmt dazu die Rolle eines OSA-Kunden (OSA-Client) an. Der Vorgang wird in der Figur durch den Pfeil OSA SD symbolisiert und wird als "OSA Service Discovery (= OSA SD) bezeichnet.

Der Vermittlungsknoten OSA/P GW informiert das zweite Zahlungssystem ZS2 über das Vorhandensein des ersten Zahlungssystems ZS1, und das zweite Zahlungssystem ZS2 fordert den Vermittlungsknoten auf, ihm eine Objektreferenz für den Aufbau einer Kommunikationsverbindung KV zu dem ersten Zahlungssystem bereitzustellen. Der Vermittlungsknoten OSA/P GW erzeugt daraufhin in dem ersten Zahlungssystem ZS1 unter Benutzung der Prinzipien der objektorientierten Programmierung (OOP) ein (Software-) Objekt (Verbindungsobjekt) für den Aufbau der Kommunikationsverbindung KV und gibt ein Kennzeichen dieses Objekts (nämlich die Referenz auf dieses Objekt) an das zweite Zahlungssystem ZS2 weiter. Das Kennzeichen kann bei der Weitergabe an das zweite Zahlungssystem vor einem Zugriff durch Unberechtigte geschützt werden, beispielsweise durch Verschlüsselung. Mit Hilfe dieses Kennzeichens kann das zweite Zahlungssystem die Kommunikationsverbindung KV zu dem ersten Zahlungssystem aufbauen. Der Vorgang der Objekterzeugung und Kennzeichenweitergabe wird als "OSA Service Access" bezeichnet und ist in der Figur 1 mit den Pfeilen OSA SA symbolisiert (OSA SA = OSA Service Access).

Nach Aufbau der Kommunikationsverbindung KV können nun Nachrichten zum Ermöglichen einer Geldzahlung zwischen dem ersten Zahlungssystem ZS1 und dem zweiten Zahlungssystem ZS2 ausgetauscht werden; es können dabei die Abläufe eines in den OSA-Vorgaben beschriebenen Zahlverfahrens namens "OSA Content Based Charging" genutzt werden. Im Rahmen des "OSA Content Based Charging" können folgende Zahlungsvarianten genutzt werden.
Immediate Charging: direkter Abzug (Abbuchung) eines Geldbetrages von einem Konto
Authorise& Capture: Reservierung eines Geldbetrages auf einem Konto für einen bestimmten Zeitraum und schrittweises Abbuchen von Teilbeträgen dieses reservierten Geldbetrages Rate & Charge: Hierbei wird dem ersten Zahlungssystem von dem zweiten Zahlungssystem kein zu zahlender Geldbetrag übermittelt, sondern andere die Zahlung beeinflussende Größen (z. B. ein die Zahlungshöhe bestimmendes Datenvolumen oder eine die Zahlungshöhe bestimmende Übertragungszeit). Aus diesen Größen kann dann von dem ersten Zahlungssystem die Höhe der zu zahlenden Summe bestimmt werden, wodurch eine variable und flexible Summenermittlung möglich wird.

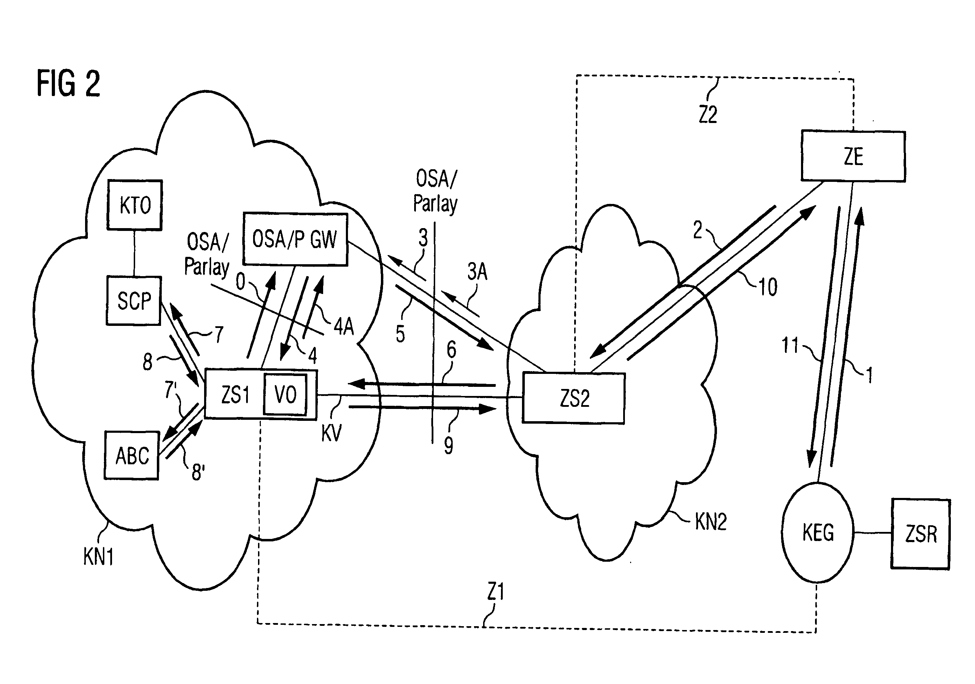

In der Figur 2 ist das bereits aus der Figur 1 bekannte erste Kommunikationsnetz KN1, das erste Zahlungssystem ZS1 eines ersten Zahlungsdienstleisters und der Vermittlungsknoten OSA/P GW sowie das zweite Kommunikationsnetz KN2 und das zweite Zahlungssystem ZS2 eines zweiten Zahlungsdienstleisters dargestellt. Im folgenden soll ein Verfahren zum Ermöglichen einer Geldzahlung sowie ein Verfahren zum Durchführen der Geldzahlung beschrieben werden. Schon vor dem eigentlichen Beginn des Verfahrens registriert sich das erste Zahlungssystem ZS1 auf dem Vermittlungsknoten OSA/P GW als eine Einrichtung, die Dienste anbietet (als ein sog. "Service Capability Server", der in diesem Fall Zahlungsdienste anbietet). Das erste Zahlungssystem ZS1 führt also eine OSA Service Registration durch (vgl. Figur 1) und ist damit dem Vermittlungsknoten OSA/P GW bekannt; dieses wird in der Figur 2 durch den Pfeil 0 symbolisiert.

Es soll nun als Beispiel beschrieben werden, dass ein Käufer bei einem Händler einen Kaufvorgang tätigen möchte und für diesen Kaufvorgang eine Geldzahlung des Käufers an den Händler ermöglicht und durchgeführt wird. Der Käufer stellt also in diesem Falle einen Zahlungssender ZSR dar, der über ein Kommunikationsendgerät KEG (z. B. über ein Handy, einen Laptop oder einen Palmtop) verfügt. Der Zahlungssender ZSR wickelt normalerweise seine Zahlungen unter Nutzung des ersten Zahlungssystems ZS1 eines Zahlungsdienstleisters (Payment Service Providers) ab; daher ist das Kommunikationsendgerät KEG dem ersten Zahlungssystem ZS1 des ersten Kommunikationsnetzes KN1 zugeordnet. Die Zuordnung ist symbolisch durch die gestrichelte Linie Z1 dargestellt. Der Händler stellt einen Zahlungsempfänger ZE dar, welcher seine Zahlungen unter Benutzung des zweiten Zahlungssystems ZS2 abwickelt. Daher ist dem Zahlungsempfänger ZE (bzw. dessem Zahlungsempfänger-Kommunikationsendgerät) das zweite Zahlungssystem ZS2 zugeordnet (Zuordnung Z2).

Der Zahlungssender ZSR sendet nun mittels seines Kommunikationsendgerätes KEG zur Tätigung des Kaufvorganges eine Kaufnachricht (Pfeil 1) an den Zahlungsempfänger ZE. Der Zahlungsempfänger bestimmt den Preis für den gewünschten Kaufgegenstand und sendet eine Zahlungsnachricht (Pfeil 2) an das zweite Zahlungssystem ZS2. Der Zahlungsempfänger ZE hat aufgrund der Tatsache, dass er des öfteren Zahlungsvorgänge mit dem zweiten Zahlungssystem ZS2 des zweiten Zahlungsdienstleiters durchführt, ein Vertragsverhältnis mit diesem zweiten Zahlungsdienstleister, so dass der zweite Zahlungsdienstleister mittels des zweiten Zahlungssystems ZS2 sofort auf die Zahlungsnachricht 2 hin für den Zahlungsempfänger ZE tätig wird. Oftmals übernimmt ein Netzwerkoperator (Network Operator) des zweiten Kommunikationsnetzes KN2 die Rolle eines Zahlungsdienstleisters, so dass es ausreicht, wenn der Zahlungsempfänger die Zahlungsnachricht an den Netzwerkoperator des zweiten Kommunikationsnetzes KN2 sendet, wobei es sich bei dem zweiten Kommunikationsnetz KN2 beispielsweise um das Kommunikationsnetz handeln kann, über das der Zahlungsempfänger normalerweise seine Kommunikationsverbindungen durchführt (beispielsweise das von ihm gewählte Telekommunikationsnetz).

Die zu dem zweiten Zahlungssystem ZS2 übersandte Zahlungsnachricht 2 enthält u. a. Angaben über den Zahlungssender ZSR. Das zweite Zahlungssystem ZS2 erkennt (beispielsweise nach Durchsuchen einer Datenbank), dass der Zahlungssender ZSR (bzw. dessen Kommunikationsendgerät KEG) nicht dem zweiten Zahlungssystem ZS2 zugeordnet ist, also beispielsweise sich bisher nicht bei dem zweiten Zahlungssystem angemeldet hat, um dieses für Zahlungen zu nutzen.

Das zweite Zahlungssystem ZS2 erkennt jedoch aus mit der Zahlungsnachricht 2 mitgelieferten Informationen über den Zahlungssender (beispielsweise aus der Mobilfunkrufnummer MSISDN dessen Kommunikationsendgerätes KEG), dass es sich bei dem Zahlungssender um einen Teilnehmer des ersten Kommunikationsnetzes KN1 handelt und dass demzufolge dieser Teilnehmer seine Zahlungsgeschäfte über das erste Zahlungssystem ZS1 des ersten Kommunikationsnetzes KN1 abwickelt. Es ist aber ebenso möglich, dass das zweite Zahlungssystem ZS2 diese Information auf eine andere Art und Weise erhält; beispielsweise kann an das zweite Zahlungssystem ZS2 eine Datenbank angeschlossen sein, in der Informationen über potentielle Zahlungssender sowie die von ihnen verwendeten und daher ihren Kommunikationsendgeräten zugeordneten Zahlungssysteme enthalten sind.

Daraufhin sendet das zweite Zahlungssystem ZS2 eine Nachricht 3 an den Vermittlungsknoten OSA/P GW des ersten Kommunikationsnetzes KN1, der mit dem ersten Zahlungssystem ZS1 verbunden ist und führt bei diesem Vermittlungsknoten eine Authentifizierung und eine Autorisation durch (OSA Authentication and Authorisation OAA, vgl. Figur 1). Dies ist in der Figur 2 durch den Pfeil 3 symbolisiert. Das zweite Zahlungssystem ZS2 gibt sich hierbei als OSA-Kunde (OSA-Client) aus. Nach erfolgreicher Authentifizierung und Autorisation sendet das zweite Zahlungssystem ZS2 eine Nachricht 3A (Anfrage 3A) zur Durchführung der sog. "OSA Service Discovery (vgl. Figur 1) an die Vermittlungsknoten OSA/P GW. Damit veranlaßt es den Vermittlungsknoten zum Suchen eines Zahlungsdienstes (Payment-Dienstes) innerhalb des ersten Kommunikationsnetzes KN1.

Dem Vermittlungsknoten OSA/P GW ist aufgrund der OSA Service Registration (Pfeil 0) das erste Zahlungssystem ZS1 im ersten Kommunikationsnetz KN1 als Anbieter von Zahlungsdiensten bekannt und daher trifft der Vermittlungsknoten Vorbereitungen, die Zahlungsdienste des ersten Zahlungssystems ZS1 für das zweite Zahlungssystem ZS2 verfügbar zu machen. Der Vermittlungsknoten OSA/P GW legt dazu auf dem ersten Zahlungssystem ZS1 ein Objekt VO an (VO = Verbindungsobjekt; es werden die Prinzipien der objektorientierten Programmierung genutzt; ein solches Verbindungsobjekt stellt eine Daten- und Programmstruktur dar). Dies ist durch den Pfeil 4 symbolisiert. Ein Kennzeichen dieses Objektes(die Referenz auf das Objekt), welches ein Kennzeichen für die aufzubauende Kommunikationsverbindung zwischen dem ersten Zahlungssystem ZS1 und dem zweiten Zahlungssystem ZS2 darstellt, wird daraufhin von dem ersten Zahlungssystem zu dem Vermittlungsknoten OSA/P GW übertragen (Pfeil 4a). Der Vermittlungsknoten sendet dieses Kennzeichen daraufhin an das zweite Zahlungssystem ZS2 weiter (Pfeil 5). Mit der Übersendung des Kennzeichens an das zweite Zahlungssystem ZS2 wird ein nachfolgender Aufbau der Kommunikationsverbindung KV zwischen dem ersten Zahlungssystem ZS1 und dem zweiten Zahlungssystem ZS2 und eine nachfolgende Geldzahlung ermöglicht.

Mit Hilfe des Kennzeichens (der Objektreferenz) kann sich nun das zweite Zahlungssystem ZS2 direkt an das erste Zahlungssystem ZS1 des ersten Kommunikationsnetzes wenden und die Kommunikationsverbindung KV zwischen den beiden Zahlungssystemen und damit auch zwischen den beiden Kommunikationsnetzen aufbauen. Über die Kommunikationsverbindung KV können daran anschließend Nachrichten zur Übermittlung der Zahlungsdetails an das erste Zahlungssystem ZS1 übermittelt werden. In diesem Ausführungsbeispiel soll die Geldzahlung erfolgen unter Nutzung eines in den OSA-Vorgaben festgelegten Verfahrens, welches als "Content Based Charging" bezeichnet wird. Bei diesem speziellen Geldzahlungsverfahren wird das erste Zahlungssystem mit dem direkten Abzug eines bestimmten Geldbetrages von einem Konto beauftragt. Dazu wird eine OSA-Operation "directDebitAmountReq" genutzt. Dieses "Content Based Charging" ist jedoch nur als ein Beispiel zu verstehen, es können auch andere spezielle Zahlungsverfahren von dem ersten Zahlungssystem ZS1 durchgeführt werden.

Das erste Zahlungssystem ZS1 erhält also mit einer Auftragsnachricht (Pfeil 6) die Aufforderung, den Zahlungssender ZSR mit einem bestimmten Geldbetrag zu belasten. Das erste Zahlungssystem ZS1 stellt nun (beispielsweise durch Abfrage aus einer ihm zugeordneten Datenbank) fest, dass der Zahlungssender ZSR seine Zahlungen bevorzugt unter Nutzung eines ihm zugeordneten Zahlungskontos in Form eines Guthabenkontos (beispielsweise eines "Prepaid"-Kontos des Kommunikationsnetzes KN1) begleicht. Daraufhin sendet das erste Zahlungssystem ZS1 eine Zahlungsanforderung (Pfeil 7) an einen intelligenten Knoten SCP (SCP = Service Control Point) des eine Struktur eines intelligenten Netzes IN (IN = Intelligent Network) aufweisenden ersten Kommunikationsnetzes KN1 weiter. Der Dienstesteuerungspunkt SCP hat Zugriff auf das Zahlungs-Konto KTO des Zahlungssenders ZSR und bewirkt eine Abbuchung der entsprechenden Geldsumme von dem Konto KTO. Bei erfolgreicher Abbuchung bestätigt der Dienstesteuerungspunkt SCP dieses dem ersten Zahlungssystem ZS1 mittels einer entsprechenden Informationsnachricht (Pfeil 8). Daraufhin sendet das erste Zahlungssystem eine Erfolgsnachricht 9 über die Kommunikationsverbindung KV an das zweite Zahlungssystem ZS2. Dies geschieht beispielsweise mit der Operation "directDebitAmountRes" aus dem "OSA Content Based Charging"-Verfahren.

In einem folgenden Schritt übersendet das zweite Zahlungssystem ZS2 eine Empfänger-Erfolgsnachricht 10 über den erfolgreichen Abbuchungsvorgang an den Zahlungsempfänger ZE (in diesem Falle an den Händler), der daraufhin eine Information 11 an das Kommunikationsendgerät KEG des Zahlungssenders ZSR sendet, mit der er den Zahlungssender ZSR über die erfolgreiche Zahlung informiert und beispielsweise Informationen über die Lieferung des gekauften Produktes oder über die gekaufte oder bestellte Dienstleistung übermittelt. Wenn der Zahlungssender bei dem Zahlungsempfänger Informationsdaten (beispielsweise Informationen über Börsenkurse) gekauft hat, so können diese Informationsdaten als Gegenstand des Kaufes auch direkt mit der Informations-Nachricht 11 an das Kommunikationsendgerät KEG des Zahlungssenders ZSR übersendet werden.

Wenn - abweichend von dem bisher beschriebenen Verfahren - in dem ersten Zahlungssystem ZS1 des ersten Kommunikationsnetzes KN1 die Information vorliegt, dass der Zahlungssender ZSR normalerweise Zahlungen per Rechnung bezahlt (und nicht wie oben beschrieben über das Zahlungskonto KTO), so kann von dem ersten Zahlungssystem ZS1 eine der Nachricht 7 ähnelnde Nachricht 7' anstelle zu dem Dienstesteuerungspunkt SCP zu einem Rechnungs-Zahlungszentrum ABC geleitet werden. Dadurch wird das Rechnungs-Zahlungszentrum ABC (ABC = Administration and Billing Center) veranlasst, die Zahlungssumme zur späteren Verrechnung mit dem Zahlungssender zu erfassen. Zu einem späteren Zeitpunkt wird dann von dem Rechnungs-Zahlungszentrum ABC eine Rechnung erstellt und an den Zahlungssender ZSR gesendet. Das Rechnungs-Zahlungszentrum ABC sendet sofort (in Realzeit - real time) nach der Erfassung der Zahlungssumme eine analog zu der Nachricht 8 aufgebaute Nachricht 8' zu dem ersten Zahlungssystem ZS1, woraufhin das Verfahren in bekannter Weise weitergeführt wird. Bei einer derartigen Ausgestaltung des Verfahrens ist es möglich, das in vielen Telekommunikationsnetzen gebräuchliche Rechnungserstellungsverfahren auch zum Durchführen der Geldzahlung bei dem erfindungsgemäßen Verfahren zu nutzen.

Zum Durchführen der Geldzahlung können auch Banken oder Kreditkartenorganisationen herangezogen werden, indem von dem ersten Zahlungssystem ZS1 entsprechende Nachrichten zu technischen Einrichtungen der Banken oder Kreditkartenorganisationen geleitet werden. Von dem ersten Zahlungssystem ZS1 können auch Währungsumrechnungen durchgeführt werden, wenn der Zahlungssender eine andere Geldwährung benutzt als der Zahlungsempfänger.

Die von dem zweiten Zahlungssystem ZS2 aufgebaute Kommunikationsverbindung kann mit einer Gültigkeitsdauer versehen sein. Eine solche Gültigkeitsdauer kann z.B. dadurch festgelegt sein, dass über die Kommunikationsverbindung nur innerhalb eines vorgegebenen Zeitintervalls Nachrichten für die Ermöglichung und Durchführung der Geldzahlung übertragen werden können (z.B. nur innerhalb der ersten 10 Minuten nach Aufbau der Kommunikationsverbindung). Die Gültigkeitsdauer kann jedoch auch z.B. durch die Zahl der übertragenen Nachrichten begrenzt sein, z.B. kann die Kommunikationsverbindung so gestaltet sein, dass sie lediglich jeweils zwei Nachrichten von dem ersten Zahlungssystem zu dem zweiten Zahlungssystem und umgekehrt überträgt.

Die beschriebenen Verfahren weisen eine Reihe von Vorteilen auf: Sie ermöglichen Geldzahlungen über die Grenzen von Kommunikationsnetzen hinweg. Insbesondere werden solche Geldzahlungen auch dann ermöglicht und durchgeführt, wenn in verschiedenen Kommunikationsnetzen verschiedene Zahlungssysteme installiert sind und die an der Geldzahlung beteiligten Partner jeweils verschiedene dieser Zahlungssysteme benutzen. Durch Nutzung der "OSA/Parlay"-Vorgaben für den Aufbau der Kommunikationsverbindung und für die Kommunikation über die Kommunikationsverbindung zwischen den Zahlungssystemen wird eine rein proprietäre Kommunikation vermieden; vielmehr wird zwischen verschiedenen Zahlungssystemen in verschiedenen Kommunikationsnetzen eine reibungslose Kommunikation ermöglicht. Des weiteren können die in der OSA/Parlay-Technologie bereits bekannten Mechanismen für das erfindungsgemäße Verfahren genutzt werden. Derartige Mechanismen betreffen beispielsweise sicherheitsrelevante Abläufe, wie die im Zusammenhang mit der Figur 1 erläuterte Authentifizierung und Autorisation oder auch Möglichkeiten zum Sichern von über Kommunikationsverbindungen übertragene Daten vor unbefugtem Zugriff und Veränderung. Durch die Nutzung derartiger in der OSA/Parlay-Technologie bereits vorhandene Möglichkeiten auch für das Ermöglichen und Durchführen von Geldzahlungen zwischen verschiedenen Zahlungssystemen (und sogar zwischen verschiedenen Kommunikationsnetzen), wird ein kostengünstiges und mit geringem Aufwand zu realisierendes Verfahren ermöglicht.

Ebenso ist es von Vorteil, dass zwischen den beteiligten Zahlungssystemen keine dauerhafte Kommunikationsverbindung bestehen muß, sondern dass diese nur im Bedarfsfall aufgebaut wird. Dies erhöht die Sicherheit vor unbefugten Zugriffen für die beteiligten Zahlungssysteme.

Weiterhin ist es besonders vorteilhaft, dass nach dem Aufbau der Kommunikationsverbindung die Kommunikation nicht über den Vermittlungsknoten abgewickelt werden muß (der Vermittlungsknoten muß also nicht eine Funktion eines sog. "Relays" übernehmen); sondern die Zahlungssysteme können über die Kommunikationsverbindung direkt miteinander kommunizieren. Dies ermöglicht eine hohe Kommunikationsgeschwindigkeit bzw. eine hohe Datenübertragungsrate.

## Patentansprüche

1. Verfahren zum Ermöglichen einer Geldzahlung unter Nutzung eines ersten Kommunikationsnetzes (KN1), wobei ein Zahlungssender (ZSR) über ein Kommunikationsendgerät (KEG) verfügt, welches einem ersten Zahlungssystem (ZS1) des ersten Kommunikationsnetzes (KN1) zugeordnet ist, und sich das erste Zahlungssystem (ZS1) bei einem mit dem ersten Zahlungssystem (ZS1) verbundenen Vermittlungsknoten (OSA/P GW) registriert (O), und wobei einem Zahlungsempfänger (ZE) ein zweites Zahlungssystem (ZS2) zugeordnet ist, bei dem
i) von dem Zahlungsempfänger (ZE) eine den Zahlungssender (ZSR) betreffende Zahlungsnachricht (2) zu dem zweiten Zahlungssystem (ZS2) übertragen wird,
ii) von dem zweiten Zahlungssystem (ZS2) anhand von in der Zahlungsnachricht (2) übersandten Informationen über den Zahlungssender erkannt wird, dass der Zahlungssender (ZSR) dem zweiten Zahlungssystem (ZS2) nicht zugeordnet ist,
iii) von dem zweiten Zahlungssystem (ZS2) eine das erste Zahlungssystem (ZS1) betreffende Anfrage (3A,OSA SD) anhand von in der Zahlungsnachricht (2) übersandten Informationen über den Zahlungssender an den Vermittlungsknoten (OSA/P GW) gesendet wird,
iv) von dem Vermittlungsknoten (OSA/P GW) auf dem ersten Zahlungssystem (ZS1) ein Verbindungsobjekt (VO) angelegt wird (4) und ein Kennzeichen, welches ein Kennzeichen für eine aufzubauende Kommunikationsverbindung (KV) zwischen dem ersten Zahlungssystem (ZS1) und dem zweiten Zahlungssystem (ZS2) darstellt, vom ersten Zahlungssystem (ZS1) zu dem Vermittlungsknoten (OSA/P GW) übertragen wird (4a),
v) von dem Vermittlungsknoten (OSA/P GW) dieses Kennzeichen an das zweite Zahlungssystem (ZS2) gesendet wird (5), um diesem den Aufbau der Kommunikationsverbindung (KV) zu ermöglichen (6), wodurch eine nachfolgende Geldzahlung (9) mittels der Kommunikationsverbindung (KV) ermöglicht wird.

2. Verfahren nach Anspruch 1,
**dadurch gekennzeichnet, dass**
- das erste Zahlungssystem (ZS1) an das erste Kommunikationsnetz (KN1) und das zweite Zahlungssystem (ZS2) an ein zweites Kommunikationsnetz (KN2) angeschlossen ist, und dass durch die Kommunikationsverbindung (KV) das erste Kommunikationsnetz (KN1) und das zweite Kommunikationsnetz (KN2) verbindbar sind.

3. Verfahren nach Anspruch 1 oder 2,
**dadurch gekennzeichnet, dass**
- das erste Zahlungssystem (ZS1) bei dem Vermittlungsknoten (OSA/P GW) als ein Bezahldienste anbietendes System registriert wird,
- von dem zweiten Zahlungssystem (ZS2) beim Stellen der Anfrage (3A,OSA SD) ein Bezahldienst angefordert wird,
- daraufhin das Kennzeichen der Kommunikationsverbindung (KV) erstellt und an das zweite Zahlungssystem (ZS2) gesendet (4A,5) wird, und
- von dem zweiten Zahlungssystem (ZS2) die Kommunikationsverbindung (KV) aufgebaut wird.

## Claims

1. Method for allowing a monetary payment using a first communications network (KN1), where a payment sender (ZSR) has access to a communications terminal (KEG) which is associated with a first payment system (ZS1) in the first communications network (KN1), and the first payment system (ZS1) registers (0) with a switching node (OSA/P GW) connected to the first payment system (ZS1), and where a payment receiver (ZE) has an associated second payment system (ZS2), in which
i) the payment receiver (ZE) transmits a payment message (2) concerning the payment sender (ZSR) to the second payment system (ZS2),
ii) the second payment system (ZS2) recognizes from information about the payment sender sent in the payment message (2) that the payment sender (ZSR) is not associated with the second payment system (ZS2),
iii) the second payment system (ZS2) sends a request (3A, OSA SD) concerning the first payment system (ZS1) to the switching node (OSA/P GW) using information about the payment sender sent in the payment message (2), and
iv) the switching node (OSA/P GW) applies (4) a connection object (VO) to the first payment system (ZS1), and an identifier, which is an identifier for a communications link (KV) to be set up between the first payment system (ZS1) and the second payment system (ZS2), is transmitted (4a) from the first payment system (ZS1) to the switching node (OSA/P GW),
v) the switching node (OSA/P GW) sends this identifier to the second payment system (ZS2) in order to allow (6) the latter to set up the communications link, which allows a subsequent monetary payment (9) using the communications link (KV).

2. Method according to Claim 1,
**characterized in that**
- the first payment system (ZS1) is connected to the first communications network (KN1), and the second payment system (ZS2) is connected to a second communications network (KN2), and **in that** the communications link (KV) can connect the first communications network (KN1) and the second communications network (KN2).

3. Method according to Claim 1 or 2,
**characterized in that**
- the first payment system (ZS1) is registered with the switching node (OSA/P GW) as a system which provides payment services,
- the second payment system (ZS2) requests a payment service when making the request (3A, OSA SD),
- the identifier for the communications link (KV) is then produced and sent (4A, 5) to the second payment system (ZS2), and
- the second payment system (ZS2) sets up the communications link (KV).

## Revendications

1. Procédé pour permettre une transaction monétaire en utilisant un premier réseau de communication (KN1), un émetteur de paiement (ZSR) disposant d'un terminal de communication (KEG) qui est associé à un premier système de paiement (ZS1) du premier réseau de communication (KN1) et le premier système de paiement (ZS1) s'enregistrant (0) auprès d'un noeud de commutation (OSA / P GW) relié au premier système de paiement (ZS1) et un deuxième système de paiement (ZS2) étant associé à un récepteur de paiement (ZE), dans lequel
i) le récepteur de paiement (ZE) transmet un message de paiement (2) concernant l'émetteur de paiement (ZSR) au deuxième système de paiement (ZS2),
ii) le deuxième système de paiement (ZS2) reconnaît à l'aide d'informations qui sont envoyées dans le message de paiement (2) et qui concernent l'émetteur de paiement que l'émetteur de paiement (ZSR) n'est pas associé au deuxième système de paiement (ZS2),
iii) le deuxième système de paiement (ZS2) envoie au noeud de commutation (OSA / P GW) une demande (3A, OSA SD) concernant le premier système de paiement (ZS1) à l'aide d'informations qui sont envoyées dans le message de paiement (2) et qui concernent l'émetteur de paiement,
iv) le noeud de commutation (OSA / P GW) met en place (4) un objet de liaison (VO) sur le premier système de paiement (ZS1) et le premier système de paiement (ZS1) transmet (4a) au noeud de commutation (OSA / P GW) un identificateur qui représente un identificateur pour une liaison de communication (KV) à établir entre le premier système de paiement (ZS1) et le deuxième système de paiement (ZS2),
v) le noeud de commutation (OSA / P GW) envoie (5) cet identificateur au deuxième système de paiement (ZS2) pour permettre (6) à celui-ci d'établir la liaison de communication (KV), ce qui permet une transaction monétaire consécutive (9) au moyen de la liaison de communication (KV).

2. Procédé selon la revendication 1,
**caractérisé par le fait que**
- le premier système de paiement (ZS1) est raccordé au premier réseau de communication (KN1) et le deuxième système de paiement (ZS2) est raccordé à un deuxième réseau de communication (KN2) et que le premier réseau de communication (KN1) et le deuxième réseau de communication (KN2) peuvent être reliés par la liaison de communication (KV).

3. Procédé selon la revendication 1 ou 2,
**caractérisé par le fait que**
- le premier système de paiement (ZS1) est enregistré auprès du noeud de commutation (OSA / P GW) comme un système offrant des services de paiement,
- à l'occasion de la demande (3A, OSA SD), le deuxième système de paiement (ZS2) demande un service de paiement,
- puis l'identificateur de la liaison de communication (KV) est élaboré et envoyé (4a, 5) au deuxième système de paiement (ZS2), et
- la liaison de communication (KV) est établie par le deuxième système de paiement (ZS2).
